# EUROPÄISCHE PATENTANMELDUNG

(11) **EP 2 644 418 A2**
(43) Veröffentlichungstag der Anmeldung: **02.10.2013**
(21) Anmeldenummer: 13160819.2
(22) Anmeldetag: 25.03.2013
(51) Int. Cl.: B60H 1/00

(54) **Klimatisierungsvorrichtung sowie Fahrzeug**

(30) Priorität: 30.03.2012 DE 102012102774
(71) Anmelder: AURORA Konrad G. Schulz GmbH & Co. KG, 69427 Mudau (DE)
(72) Erfinder: Goldschmitt, Dieter, 74746 Höpfingen (DE); Wolf, Hannes, 74722 Buchen (DE)
(74) Vertreter: Baronetzky, Klaus

(57) **Zusammenfassung**

Die Erfindung betrifft eine Klimatisierungsvorrichtung für zumindest eine Sitz- und/oder Liegestelle, insbesondere für zumindest ein Bett (3), zum Einbau in einem Fahrzeug, mit einer oder mehreren Ausblaseinrichtungen (5) zum Ausblasen von Luft, vorzugsweise temperierter Luft, insbesondere gekühlter Luft, wobei mindestens eine Ausblaseinrichtung (5) von einer zumindest teilweise von einem luftdurchlässigen flexiblen Flächengebilde (8), vorzugsweise Gewebe, begrenzten, vorzugsweise kissen-, decken- oder haubenförmigen Luftverteilungseinrichtung (1) abdeckt ist und die Luftverteilungseinrichtung (1) die zumindest eine Sitz- und/oder Liegestelle in Vertikalprojektion im Wesentlichen überdeckt.

## Beschreibung

Die vorliegende Erfindung betrifft eine Klimatisierungsvorrichtung, welche zum Einbau in ein Fahrzeug bestimmt ist, gemäß dem Oberbegriff von Anspruch 1, sowie ein Fahrzeug gemäß dem Oberbegriff von Anspruch 15.

Klimatisierungsvorrichtungen für Gebäude und Fahrzeuge sind bereits seit langem bekannt und werden millionenfach verwendet. Verbreitet wird dabei unter dem Begriff "Klimatisierungsvorrichtung" eine Klimaanlage verstanden, die Luft Raumluft im Umluftbetrieb abkühlt. In dieser Beschreibung sei jedoch von dem Begriff Klimatisierung jegliche Heizung, Kühlung, Luftumwälzung und/oder (Außen-) Lufteinblasung umfasst, wobei bereits die Bereitstellung einer der vorgenannten Funktionen für eine Klimatisierung hinreichend ist. Optional kann weiterhin auch eine Luftbe- und/oder -entfeuchtung stattfinden. So fallen also auch beispielsweise thermostatgesteuerte Heizungseinrichtungen oder Belüftungseinrichtungen zur Zuführung kühlerer Umgebungsluft ebenso wie Einrichtungen mit Kühl- oder Heiz- und Kühlfunktion unter den Begriff der Klimatisierung, wie er in diesem Kontext verstanden werden soll.

Bei Klimatisierungsvorrichtungen treten zwei Hauptproblemkomplexe auf, die bereits seit langem hinlänglich bekannt sind:

Die Heizungsfunktion und insbesondere die Kühlungsfunktion ist sehr energieaufwendig. Dieses Problem tritt bei Fahrzeugklimaanlagen besonders bei stehenden Fahrzeugen auf, insbesondere, wenn diese nicht die benötigte Energie für die Klimatisierungsvorrichtung aus einem Stromnetz beziehen können. Dies hat zur Folge, dass die Leistung der Klimatisierungsvorrichtung stark begrenzt werden muss und/oder die Klimatisierungsvorrichtung nur kurze Zeit betrieben werden kann. Eine Versorgung aus der Fahrzeugbatterie während einer Standzeit über Nacht ist somit bei herkömmlichen Klimatisierungsvorrichtungen nicht möglich. Außerdem führt der Betrieb einer Klimatisierungsvorrichtung nach dem Stand der Technik zu nicht unerheblichen Energieverbrauchskosten und einer entsprechenden Umweltbelastung.

Der zweite Problemkreis betrifft die optimale Anpassung der Luftführung an die Bedürfnisse der Benutzer der Klimatisierungsvorrichtung. Üblicherweise sind Luftausströmer für die temperierte, d. h. gewärmte oder gekühlte Luft im Deckenbereich des Fahrzeugs oder an anderer Stelle (beispielsweise Ausströmer in Seitenverkleidungen, Bodenluftausströmer) eingebaut oder es befinden sich mehrere Luftausströmer an verschiedenen Stellen des Fahrzeugs. Häufig sind die Luftausströmer auch einstellbar hinsichtlich Auswurfmenge und Auswurfrichtung für die temperierte Luft und können durch den Benutzer eingestellt werden. Trotzdem entstehen Luftverwirbelungen und Geräuschbelastungen, sowie eine Zugbelästigung für die Benutzer durch die anhaltende Beaufschlagung durch den gerichteten Luftstrom aus den Luftausströmern, wodurch Verkühlungen und Erkältungskrankheiten auftreten können. Auch wenn man versucht, diese Probleme durch Luftverteilungseinrichtungen und/oder Strömungsvergleichmäßigungseinrichtungen zu verbessern und die Luftausströmer zu optimieren, so sind diese Lösungen zumeist noch nicht befriedigend. Insbesondere bei ruhendem Aufenthalt des Benutzers auf einem Sitz, einem Liegesitz oder einer Liegestelle, wie einem Bett, führt die langfristige Beaufschlagung des Benutzers mit einem Luftstrom oft zu den vorgenannten Irritationen.

Es ist daher die Aufgabe der vorliegenden Erfindung, eine Klimatisierungsvorrichtung gemäß dem Oberbegriff von Anspruch 1 bzw. ein Fahrzeug gemäß dem Oberbegriff von Anspruch 15 derart weiterzubilden, dass der Energiebedarf deutlich vermindert werden kann und für die Benutzer eine besonders geräuscharme und zugfreie Klimatisierung bereitgestellt und damit der Benutzungskomfort deutlich gesteigert werden kann. Außerdem wird angestrebt, durch die erfindungsgemäße Klimatisierungsvorrichtung einen durchgehenden Betrieb während der Nacht auch bei stehendem Fahrzeug und ohne leistungsfähige externe Stromzuführung zu gewährleisten.

Diese Aufgabe wird erfindungsgemäß durch Anspruch 1 bzw. 15 gelöst. Vorteilhafte Weiterbildungen ergeben sich aus den Unteransprüchen.

Durch die erfindungsgemäße Klimatisierungsvorrichtung mit der erfindungsgemäßen Luftverteilungseinrichtung ist es in vorteilhafter Weise möglich, Luft, vorzugsweise temperierte Luft, insbesondere gekühlte Luft, in enger räumlicher Nachbarschaft zu einer Sitz- und/oder Liegestelle auszublasen, in unmittelbarer Nähe beispielsweise zu einem schlafenden Benutzer, der sich dort nahezu bewegungslos beispielsweise während der gesamten Nacht im Ausblasluftstrom aufhält, ohne nachteilige Folgen von beispielsweise Verkühlungen oder Erkältungen befürchten oder Einbußen an Komfort oder Schlafqualität des Schlafenden hinnehmen zu müssen. Im Gegenteil ist es durch die erfindungsgemäße Vorrichtung sogar möglich, den Komfort durch eine derartige Zufuhr von Luft, beispielsweise temperierter Luft, zu steigern und so Schlafqualität und Erholungseffekt für den Benutzer zu erhöhen. Gleichzeitig kann anderweitig auftretende Zugluft, die sonst beispielsweise durch geöffnete Fenster hervorgerufen würde, vermieden werden. Da durch die Verwendung der erfindungsgemäßen Kühlungsvorrichtung eine Lüftung durch geöffnete Fenster entfallen kann, verringert sich ebenfalls das Risiko von Einbrüchen oder von Unwetterschäden im Innenraum des Fahrzeugs.

Zusätzlich zu der durch die erfindungsgemäße Lösung ermöglichten Annährung der Ausblaseinrichtung an die Sitz- und/oder Liegestelle des Benutzers, ist es möglich, die Luft gezielter in die Umgebung des Benutzers zuzuführen und nicht im gesamten Raum beispielsweise einer Fahrzeugkabine zu verteilen. Durch eine Anbringung der Luftverteilungseinrichtung über der Sitz- und/oder Liegestelle ist es möglich, eine beispielsweise kühlere Luft von den Ausblaseinrichtungen über die erfindungsgemäße Luftverteilungseinrichtung auf den Benutzer "herunterschleiern" zu lassen.

Außerdem können leicht Maßnahmen zur "Kompartimentierung" des Raums um die Sitz-und/oder Liegestelle gegenüber der Umgebung, beispielsweise der Fahrzeugkabine, ergriffen werden, um die ausgeblasene Luft gezielter zu nutzen und auf den bevorzugten Anwendungsort zu konzentrieren. Es ist sogar problemlos möglich, die Sitz- und/oder Liegestelle in einem sehr kleinen Raum oder in einer Koje unterzubringen und diese gegenüber dem übrigen beispielsweise Wohnraum bzw. den Raum der Fahrzeugkabine abzutrennen und dennoch in Raum oder Koje um die Sitz- und/oder Liegestelle für eine gute, angenehme Klimatisierung und beispielsweise auch für Frischluft zu sorgen.

Ein weiterer großer Vorteil der erfindungsgemäßen Klimatisierungsvorrichtung ist, dass durch die gezieltere Verbringung und Abgabe der Luft der Energieverbrauch erheblich gesenkt werden kann. Dies ist von besonders großer Bedeutung, wenn die Klimatisierungsvorrichtung einen Kühlungsbetrieb erlaubt und dieser vom Benutzer gewählt wird. Außerdem kann durch die erfindungsgemäße Klimatisierungsvorrichtung eine Klimatisierung, - insbesondere Kühlung - der Sitz- und/oder Liegevorrichtung auch während längerer Standzeiten oder z. B auch über Nacht bereitgestellt werden, während anderenfalls, ohne die erfindungsgemäße Vorrichtung, eine Klimatisierungsvorrichtung nach dem Stand der Technik sonst wegen des hohen Energiebedarfs ausgeschaltet werden müsste.

Ein weiterer großer Vorteil der erfindungsgemäßen Klimatisierungsvorrichtung besteht darin, dass Betriebskosten und Umweltbelastungen durch den Betrieb, insbesondere im Kühlungsbetrieb, erheblich gesenkt werden können.

In einer besonderen Ausgestaltung der Erfindung kann die Luftverteilungseinrichtung zumindest zwei unterschiedliche flexible Flächengebilde, vorzugsweise Gewebe, mit unterschiedlichen Luftdurchlässigkeiten aufweisen. Hierdurch kann der Durchtritt der ausgeblasenen Luft gezielt beeinflusst werden und die Ausströmung der Luft auf bestimmte Flächenbereiche der Luftverteilungseinrichtung begrenzt werden. Ebenso ist es denkbar, mehrere Typen flexibler Flächengebilde mit mehereren unterschiedlichen Luftdurchlässigkeiten einzusetzen oder auch flexible Flächengebilde zu verwenden, die beispielsweise durch eine spezifische Beschichtung in Teilbereichen luftundurchlässig sind, während andere Teilbereiche dieser Flächengebilde weitgehend luftdurchlässig sind. So lässt sich eine besonders gezielte und auf Benutzerbedürfnisse zugeschnittene Verteilung der ausgeblasenen Luft vornehmen.

In einer weiteren bevorzugten Ausführungsform kann die Klimatisierungsvorrichtung ferner eine Luftrückhalteeinrichtung aufweisen, wodurch vorzugsweise ein Luftaustausch zwischen einem der klimatisierbaren Sitz- und/oder Liegestelle zugeordneten Raum und der Umgebung verringert werden kann. Durch eine solche Luftrückhalteeinrichtung lassen sich der Wirkungsgrad und die Effizienz der Klimatisierungsvorrichtung ganz erheblich steigern. Als eine solche Luftrückhalteeinrichtung käme beispielsweise die Anbringung von Vorhängen, Türen, Rückhalte- oder Abweisblenden (fest installiert oder wegklappbar), aber auch die zuvor genannte Ausführungsform einer deckenartigen Luftverteilungseinrichtung in Frage.

In einer weiteren bevorzugten Ausführungsform kann die Luftrückhalteeinrichtung im Wesentlichen senkrecht zur Haupterstreckungsebene der Luftverteilungseinrichtung - und vorzugsweise an dieser herabhängend befestigt - angeordnet sein. Auch dies dient im Wesentlichen der Steigerung von Wirkungsgrad und Effizienz der Klimatisierungsvorrichtung, da der Luftaustausch zwischen einem der klimatisierbaren Sitz- und/oder Liegestelle zugeordneten Raum und der Umgebung verringert wird. Hierfür könnten entweder erweiterte, beispielsweise deckenartig gestaltete Bereiche der Luftverteilungseinrichtung oder aber einfache Vorhänge, die an der Luftverteilungseinrichtung vorzugsweise herabhängend befestigt sind, Verwendung finden. Ebenso könnten aber auch starre Blenden, die beispielsweise an der Fahrzeugdecke befestigt sind, aber auch an anderen Bereichen des Fahrzeugs oder an der Sitz- und/oder Liegestelle angebracht und vorzugsweise auch beweglich, insbesondere wegklappbar ausgeführt sein können, zum Einsatz kommen.

In einer weiteren bevorzugten Ausführungsform der Erfindung kann das luftdurchlässige flexible Flächengebilde der Luftverteilungseinrichtung eine Fläche von mindestens 1 m² aufweisen, wobei durch das luftdurchlässige flexible Flächengebilde eine maximale Strömungsgeschwindigkeit der ausgeblasenen, das flexible Flächengebilde durchtretenden Luft von vorzugsweise weniger als 0,1 m / s bei einem Druckgradienten von vorzugsweise zwischen 20 und 500 Pa, insbesondere von zwischen 50 und 200 Pa, erzeugbar sein. Durch die Verwendung einer großen Fläche des luftdurchlässigen flexiblen Flächengebildes von beispielsweise mindestens 1 m² ist es möglich, die ausströmende Luft sehr gleichmäßig über große Flächenbereiche zu verteilen und so die Ausströmgeschwindigkeit extrem zu verringern. Hierdurch lässt sich eine besonders angenehme Klimatisierung gewährleisten, die eine Unterkühlung des Benutzers und die Gefahr von Erkältungskrankheiten nahezu ausschließt.

Natürlich ist es genauso denkbar, nur Teile des flexiblen Flächengebildes luftdurchlässig zu gestalten und ebenfalls sehr gut Luftverteilungsergebnisse zu erzielen, selbst wenn die Fläche des luftdurchlässigen flexiblen Flächengebildes kleiner als 1 m² ist und beispielsweise nur 0,5 m² oder 0,2 m² beträgt. Damit die Luftverteilungseinrichtung ihre Aufgabe einer sehr gleichmäßigen Luftverteilung, einer Strömungsverstetigung und Strömungsvergleichmäßigung besonders gut erfüllen kann, ist es zweckmäßig einen Druckgradienten über dem flexiblen Flächengebilde von vorzugsweise zwischen 20 und 500 Pa insbesondere von zwischen 50 und 200 Pa aufzubauen. Hierbei ist es besonders sinnvoll die Luftdurchlässigkeit des flexiblen Flächengebildes sowie dessen Fläche so zu bemessen, dass eine gleichmäßige Ausströmgeschwindigkeit der das flexible Flächengebilde durchtretenden Luft von vorzugsweise weniger als 0,1 m/s an keiner Stelle überschritten wird. Auf diese Weise ist es problemlos möglich ein Luftvolumen von zwischen 20 und 100 m³ pro Stunde und Benutzer auszutauschen.

In einer bevorzugten Ausführungsform kann die Luftverteilungseinrichtung im Wesentlichen kissen- oder deckenförmig ausgebildet sein und vorzugsweise an einem Fahrzeug oder Kabinendach befestigbar sein. Dies stellt eine besonders einfache und wirkungsvolle Ausführungsform für eine Luftverteilungseinrichtung dar.

In einer weiteren bevorzugten Ausführungsform kann die Luftverteilungseinrichtung im Wesentlichen deckenförmig ausgebildet und zur Anordnung oberhalb der mindestens einen Sitz- und/oder Liegestelle und unterhalb des Fahrzeug- oder Kabinendaches - und vorzugsweise an diesen befestigt - eingerichtet sein. Dies stellt eine bevorzugte Ausgestaltung der Luftverteilungseinrichtung dar, die so auf besonders günstige Weise zur Montage am Kabinendach oberhalb der Sitz- und/oder Liegestelle vorgesehen und eingerichtet ist.

In einer weiteren bevorzugten Ausführungsform der Erfindung kann die Luftverteilungseinrichtung bereichsweise, vorzugsweise insbesondere in den Bereichen, die der Sitz- und/ oder Liegestelle nicht zugewandt sind, ein weitgehend luftundurchlässiges flexibles Flächengebilde, vorzugsweise Gewebe, aufweisen. Durch diese Maßnahme kann vermieden werden, dass ein Teil der ausgeblasenen Luft ungenutzt in den umgebenden Raum der beispielsweise Fahrzeugkabine entweicht. Vielmehr kann erreicht werden, dass die ausgeblasene Luft möglichst vollständig und effizient dem auf der Sitz- und/oder Liegestelle verweilenden Benutzer zugeführt wird.

In einer weiteren bevorzugten Ausführungsform der Erfindung kann die Luftverteilungseinrichtung einen im wesentlichen geschlossenen, flächigen Hohlraum zwischen zwei Lagen des flexiblen Flächengebildes vorzugsweise Gewebe, durch welche der Hohlraum begrenzt ist, ausbilden, wobei, zumindest bereichsweise, flexible Flächengebilde, vorzugsweise Gewebe, mit unterschiedlichen Luftdurchlässigkeiten einander gegenüberliegen. Auch durch diese Ausführungsform lässt sich die Ausnutzung der ausgeblasenen Luft und die gezielte Zuführung in den Raum um die Sitz- und/oder Liegestelle verbessern. Ebenso ist es denkbar, die Luftverteilungseinrichtung beispielsweise nach Art einer abgesteppten Bettdecke ausbilden und beispielsweise teilweise im Deckenbereich aufzuhängen während andere Teile dieser deckenartig ausgeführten Luftverteilungseinrichtung herabhängen und so die Sitz- und/oder Liegestelle beispielsweise von dem umgebenden Raum abtrennen können. Diese insbesondere herabhängenden Teile der deckenartig ausgeführten Luftverteilungseinrichtung können bevorzugt auf der der Sitz- und/oder Liegestelle zugewandten Seite ein luftdurchlässiges flexibles Flächegebilde aufweisen, während die abgewandte Seite der deckenartig ausgeführten Luftverteilungseinrichtung ein luftundurchlässiges flexibles Flächengebilde aufweisen könnte.

In einer bevorzugten Ausführungsform kann die Klimatisierungsvorrichtung mobil aufstellbar und betreibbar sein. In diesem Zusammenhang ist es denkbar eine Klimatisierungsvorrichtung so auszugestalten, dass diese mobil beispielsweise in einem Fahrzeug aufstellbar ist und betrieben werden kann. In gleicher Weise könnte eine solche Klimatisierungsvorrichtung aber auch im Schlafzimmer einer Wohnung verwendet werden, oder auch in Zelten (sei es beispielsweise zu Campingzwecken, in Unterkunftszelten, Lazarettzelten oder Katastrophenschutzzelten) eingesetzt werden. Ebenfalls wäre es möglich, derartige Klimatisierungsvorrichtungen beispielsweise vom Betreiber eines Campingplatzes an seine Gäste zu vermieten, damit diese die Vorrichtung in ihren Wohnwagen, Wohnmobilen oder Zelten verwenden können.

In einer weiteren bevorzugten Ausführungsform kann die Luftverteilungseinrichtung zum Betrieb mit mindestens einer Ausblaseinrichtung zum Ausblasen temperierter Luft verbindbar sein. Hierbei kann beispielsweise der Benutzer entscheiden, ob er die Klimatisierungsvorrichtung nutzen möchte und nur in diesem Falle die Luftverteilungseinrichtung an der Ausblaseinrichtung anschließen und die Luftverteilungseinrichtung im Bereich der Sitz-und/oder Liegestelle anbringen bzw. montieren, während er anderenfalls die Luftverteilungseinrichtung abbauen und wegpacken kann, so dass diese in nicht den Wohnraum bzw. die Fahrzeugkabine beeinträchtigt. Ebenso ist es denkbar, verschiedene Luftverteilungseinrichtungen alternativ anzubieten oder bereitzuhalten, aus denen der Benutzer nach seinen persönlichen Präferenzen eine geeignete auswählen kann. Weiterhin ist es möglich, beispielsweise Luftverteilungseinrichtungen später nachzukaufen und in einem Fahrzeug mit entsprechender Klimatisierungsvorrichtung mit Ausblaseinrichtungen einfach nachträglich anzuschließen.

In einer weiteren bevorzugten Ausführungsform kann die Klimatisierungsvorrichtung zum nachträglichen Einbau in ein Fahrzeug vorgesehen und geeignet sein. Die Bereitstellung einer solchen Klimatisierungsvorrichtung ist besonders erwägenswert vor dem Hintergrund, dass bereits eine sehr große Anzahl an Fahrzeugen in Verwendung sind, die noch keine erfindungsgemäße Klimatisierungsvorrichtung engebaut haben, deren Benutzer jedoch zukünftig gerne den Komfort einer langfristig temperierbaren Sitz- und/oder Liegestelle in ihren Fahrzeug nutzen wollen.

In einer weiteren bevorzugten Ausführungsform kann die Klimatisierungsvorrichtung mindestens hinsichtlich einer der Komponenten Luftfördereinrichtung, Heizungseinrichtung, Kühleinrichtung, Verdichter, Verdampfer, Wärmetauscher und/oder Luftverteilungseinrichtung modular aufgebaut sein. Eine solche modulare Lösung ist besonders reparatur- und wartungsfreundlich und kann sehr flexibel an unterschiedliche Betriebsbedingungen, Benutzervorgaben und unterschiedliche Fahrzeugtypen angepasst werden. So ist es beispielsweise denkbar, angepasste Vorrichtungen bereitzuhalten, die der Anzahl der Sitz-und/oder Liegestellen bzw. Schlafstellen, der Größe des Bettes (Länge, Breite, Einzelbett, Doppelbett), der gewünschten Klimatisierungsleistung, der Energieversorgungssituation des Fahrzeugs, der Verwendung in verschiedenen Klimazonen und zu verschiedenen Jahreszeiten, besonderen Einsatzanforderungen (Einsatz in tropischen oder besonders heißen Klimazonen, in besonders kalten Klimazonen, in Gegenden mit hoher Luftfeuchtigkeit, im Seewasserklima, Verwendung bei Gefahrenguttransporten), etwaigen bereits eingebauten Klimaanlagen oder Heizeinrichtungen, beispielsweise Standheizungen, und/ oder dem zur Verfügung stehende Kostenrahmen Rechnung zu tragen.

In einer weiteren bevorzugten Ausführungsform kann die Klimatisierungsvorrichtung - vorzugsweise mittels einer drahtlosen Bedieneinheit - insbesondere mittels eines Mobiltelefons - fernbedienbar sein. So lässt sich der Bedienungskomfort für den Nutzer erheblich verbessern. Besonders angenehm ist es für den Benutzer, wenn die Bedieneinheit nicht an einem Kabel angeschlossen ist und er diese an eine geeignete Stelle neben seiner Sitz- und/oder Liegestelle ablegen kann. Zu diesem Zweck kann auch ein zumeist ohnehin vorhandenes Mobiltelefon des Benutzers verwendet werden, wenn dieses durch eine geeignete Softwareapplikation mit einer Steuerfunktion für die Klimatisierungsvorrichtung nachgerüstet worden ist. Die Kommunikation zwischen dem Mobiltelefon und der Klimatisierungsvorrichtung kann beispielsweise über GSM, UMTS, WIFI, Bluetooth und/oder WLAN erfolgen.

In einer weiteren bevorzugten Ausführungsform kann die Klimatisierungsvorrichtung eine - vorzugsweise elektrisch veränderbare, insbesondere dimmbare - Beleuchtungseinrichtung aufweisen. So ist es beispielsweise denkbar, die Klimatisierungsvorrichtung mit einer verstellbaren Lese- und/oder Nachtlampe auszustatten, die vorzugsweise dimmbar ausgeführt sein kann. Es ist aber auch möglich, die Klimatisierungsvorrichtung mit mehreren Beleuchtungseinrichtungen auszustatten, die elektrisch angesteuert werden können. Auch können beispielsweise in Verbindung mit der Luftverteilungseinrichtung, die hierfür auch als (beispielsweise transluzente oder reflexive) Projektionsfläche genutzt werden könnte, besondere Licht- und/oder Farbeffekte zu erzeugen, die eine ästhetische Funktion bereitstellen oder der Entspannung des Benutzers dienen können. Dabei können beispielsweise auch Licht- und/oder Farbmuster kontinuierlich verändert werden. Weiterhin besteht die Möglichkeit, auf diese Weise eine Lichtweckeinrichtung bereitzustellen, die den Benutzer zu einer gewünschten Weckzeit - schlafphysiologisch vorteilhaft - besonders sanft und gut ausgeschlafen aufweckt.

Weiterhin wird zur Lösung dieser Aufgabe auch ein Fahrzeug angegeben, insbesondere Wohnwagen, Wohnmobil, Lastkraftwagen oder Schiff, welches mindestens eine klimatisierbare Sitz- und/oder Liegestelle, insbesondere Bett, sowie eine Klimatisierungsvorrichtung nach einer der vorgenannten Ansprüche aufweist.

In einer weiteren bevorzugten Ausführungsform kann die Klimatisierungsvorrichtung überdies eine Zweiwegeumschaltvorrichtung aufweisen, die dem Luftauslass des Klimageräts nachgeschaltet ist. Durch die somit realisierbare Umschaltung kann die von dem Klimagerät ausgeblasene temperierte Luft entweder der bzw. den Ausströmvorrichtung(en) im Fahrzeuginnenraum oder aber einer weiteren Ausströmvorrichtung zugeleitet werden, die sich außerhalb des Fahrzeugs, beispielsweise in einer so genannten Strandmuschel, befindet. Diese weitere Ausströmvorrichtung sollte natürlich in der Nähe des Fahrzeugs aufgestellt sein, um den Druckverlust bzw. eine ungewünschte Erwärmung der insbesondere gekühlten Luft durch zu lange Zuleitungen zu der weiteren Ausströmvorrichtung zu vermeiden. Die Umschaltung der Zweiwegeumschaltvorrichtung auf den gewünschten Ausströmort für die temperierte Luft kann dabei manuell, elektromechanisch, hdraulisch, pneumatisch oder jeder anderen geeigneten Art und Weise erfolgen. Der Anschluss der weiteren Ausströmvorrichtung kann über eine geeignete Leitung, bspw. einen Klimaschlauch, erfolgen, welcher bevorzugt über eine schnell und leichtgängig verriegelnde Flanschvorrichtung an die Zweiwegeumschaltvorrichtung angeschlossen werden kann. Durch eine solche verriegelnde Flanschvorrichtung ist ein einerseits vor unbeabsichtigtem Auftrennen sicherer und andererseits schneller und unkomplizierter Anschluss der weiteren Ausströmvorrichtung möglich, was gerade bei häufigeren Ortswechseln beim Camping vorteilhaft ist.

Im Kontext dieser Erfindung sei unter dem Begriff Klimatisierung mindestens einer der folgenden Begriffe: Kühlung, Luftumwälzung, Luftzuführung (z. B. Luftansaugung kühlerer Umgebungsluft) und/oder Heizung, sowie optional auch Luftbe- und/oder -entfeuchtung verstanden, wie eingangs bereits ausgeführt. Bei einer Sitz- und/oder Liegestelle kann es sich beispielsweise um einen Fahrzeugsitz, einem anderen Sitz oder einen Liegesitz oder Schlafsitz, Schlafsessel, aber auch um eine Liege oder ein Bett oder Doppelbett oder eine Liegefläche für mehrere Personen handeln. Durch die Klimatisierungsvorrichtung wird Luft transportiert und vorzugsweise in den Raum um und/oder über der Sitz- und/oder Liegestelle zugeführt. Vorzugsweise handelt es sich dabei um temperierte Luft, d. h. um Luft, die vorzugsweise thermostatgesteuert in ihrer Temperatur verändert (d. h. erwärmt und/ oder gekühlt) wird. Die Luftverteilungseinrichtung ist im erfindungsgemäßen Betrieb mit mindestens einer Ausblaseinrichtung lose bzw. lösbar oder fest verbunden. Die Luftverteilungseinrichtung kann auch vom Benutzer nur bedarfsweise mit der Ausblaseinrichtung verbunden werden. Die Luftverteilungseinrichtung ist so dimensioniert, dass sie im Betrieb bei Anbringung oberhalb der Sitz- und/oder Liegestelle die Fläche der Sitz- und/oder Liegestelle in Vertikalprojektion im Wesentlichen überdeckt. Für den Fall, dass sich bei der Sitz- und/oder Liegestelle beispielsweise um ein Doppelbett oder eine Liegefläche für mehrere Personen handelt, so ist es denkbar, hierfür entweder eine gemeinsame Luftverteilungseinrichtung zu verwenden, die optional auch durch Vorhänge oder Luftrückhalteeinrichtungen voneinander getrennt werden können, oder mehrere Luftverteilungseinrichtungen zu verwenden, die entweder gemeinsam betrieben werden oder die auch getrennt voneinander geregelt werden und so von den Benutzern unterschiedlich nach ihren persönlichen Bedürfnissen eingestellt werden können.

Die Erfindung wird nicht durch die konkret beschriebenen Ausführungsformen begrenzt; die Merkmale aller vorgenannten und/oder in den abhängigen Ansprüchen niedergelegten Ausführungsformen, sowie die in den nachstehend illustrierten Ausführungsformen genannten Merkmale sind - sowie sie sich nicht gegenseitig technisch ausschließen - frei miteinander kombinierbar.

Im Folgenden wird die Erfindung anhand einiger Figuren und Ausführungsbeispiele exemplarisch weiter erläutert. Es zeigen:
- Fig. 1: Die schematische Darstellung einer Klimatisierungsvorrichtung für ein Doppelbett nach einer ersten Ausführungsform,
- Fig. 2: Die schematische Darstellung einer Klimatisierungsvorrichtung für ein Doppelbett nach einer zweiten Ausführungsform,
- Fig. 3: Die schematische Darstellung einer Klimatisierungsvorrichtung für ein Doppelbett nach einer dritten Ausführungsform,
- Fig. 4: Die schematische Darstellung einer Klimatisierungsvorrichtung für ein Einzelbett nach einer vierten Ausführungsform, und
- Fig. 5: Die schematische Darstellung einer Klimatisierungsvorrichtung mit einer weiteren Ausströmvorrichtung nach einer fünften Ausführungsform.

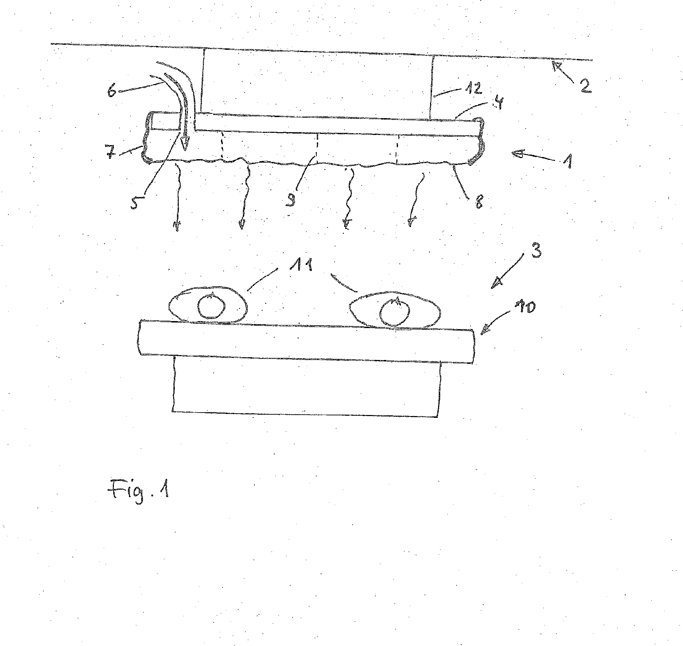

Fig. 1 zeigt schematisch eine Luftverteilungseinrichtung 1 nach einer ersten Ausführungsform, welche mittels Befestigungen 12 am Fahrzeugdach 2 einer Kabine eines Wohnmobils oder eines Wohnwagens oberhalb eines Doppelbettes 3 angebracht ist. Diese Luftverteilungseinrichtung 1 besteht aus einer Abdeckplatte 4, die eine Ausblaseinrichtung 5 aufweist, welche mittels eines Schlauches 6 mit einem hier nicht dargestellten Klimatisierungsaggregat verbunden ist. Bei einem solchen Klimatisierungsaggregat kann es sich um eine Heiz- und/oder Kühleinrichung oder auch lediglich um eine Luftfördereinrichtung handeln, wie dies bereits zuvor erläutert wurde. Die durch das Klimatisierungsaggregat beförderte Luft strömt durch die Ausblaseinrichtung 5 in den als Überdruckraum ausgebildeten Hohlraum der Luftverteilungseinrichtung 1 der oberseitig durch die Abdeckplatte 4 und seitlich durch ein luftundurchlässig beschichtetes Gewebe 7, sowie unterseitig ein luftdurchlässiges Gewebe 8 begrenzt ist, so dass sich auch eine Strömungsvergleichsrichtung ergibt. Zur Stabilisierung der Form der Luftverteilungseinrichtung 1 befinden sich im Inneren des Hohlraums zwischen der Deckplatte 4 und dem luftdurchlässigen Gewebe 8 Stabilisierungseinrichtungen 9 beispielsweise durch eingearbeitete Fäden oder Stoff. Darunter befindet sich das Doppelbett 3 mit der Matratze 10, auf der sich zwei liegende Personen 11 befinden.

Die durch das Klimatisierungsaggregat geförderte Luft strömt über den Schlauch 6 und die Ausblaseinrichtung 5 in den Hohlraum der Luftverteilungseinrichtung 1 ein, in dem sich die Luft verteilt und sich ein leichter Überdruck von vorzugsweise zwischen 20 und 500 Pa, insbesondere von zwischen 50 und 200 Pa, aufbaut. Dem Druckgradienten folgend durchströmt die Luft das luftdurchlässige Gewebe 8 und schleiert auf die darunterliegenden Personen 11 herab, wobei die Strömungsgeschwindigkeit der ausgeblasenen, das luftdurchlässige Gewebe durchtretenden Luft vorzugsweise weniger als 0,1 m / s beträgt. Hierbei wird ein Luftvolumen von vorzugsweise zwischen 10 und 100 m³ pro Person und Stunde, insbesondere von zwischen 20 und 50 m³ pro Person und Stunde, umgewälzt. Durch die großflächige und gleichmäßige Durchströmung des luftdurchlässigen Gewebes lässt sich trotz der relativen Nähe der Ausblaseinrichtung an den liegenden Personen 11 und des relativ großen ausgeblasenen Luftvolumens eine praktisch zug- und störungsfreie und nahezu geräuschlose Klimatisierung der Liegestelle erzielen.

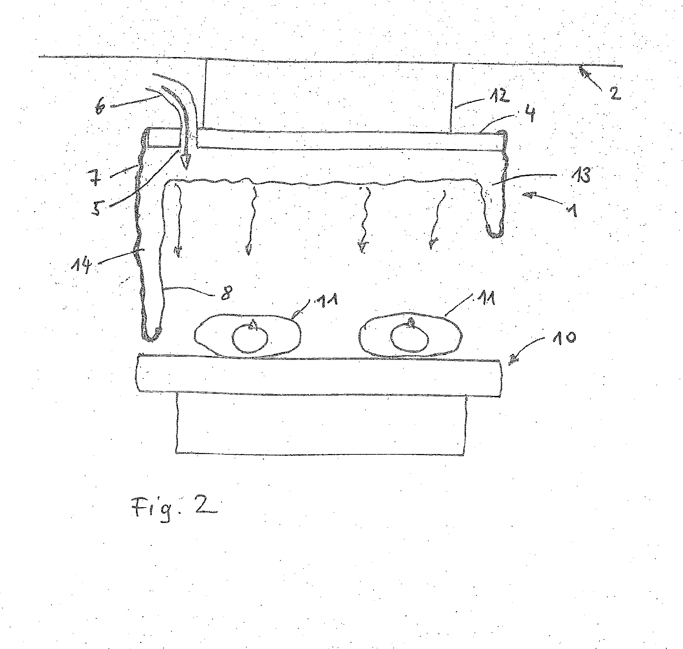

Fig. 2 zeigt eine Klimatisierungsvorrichtung nach einer zweiten Ausführungsform. Um Wiederholungen zu vermeiden wird nachfolgend nur auf die Unterschiede zur ersten Ausführungsform eingegangen. Die Luftverteilungseinrichtung 1 weist luftgefüllte Hohlschürzen 13, 14 auf, deren Hohlräume mit dem horizontal angeordneten Hohlraum der Luftverteilungseinrichtung 1 in Verbindung stehen. Solche Schürzen können kurz ausgeführt sein, wie die in der Abbildung rechtsseitig dargestellte Schürze 13 und nur im oberen Teil des lichten Raums zwischen der horizontalen Luftverteilungseinrichtung und der Matratze 10 angeordnet sein, oder wie die linksseitig in der Abbildung dargestellte Schürze 14, bis zur Matratze 10 herabhängen oder sogar auf dieser aufliegen, um so den Luftaustausch zwischen dem klimatisierbaren Raum oberhalb der Matratze 10 und der Umgebung der z. B. Wohnmobilkabine noch weiter zu verringern. Die Schürzen weisen zweckmäßiger Weise nur auf ihre Innenseite ein luftdurchlässiges Gewebe 8 auf, während auf der Außenseite luftundurchlässiges Gewebe 7 angebracht ist. Diese Schürzen können von den Benutzern zum Betreten oder Verlassen des Bettes beispielsweise leicht angehoben oder beiseite geschoben werden.

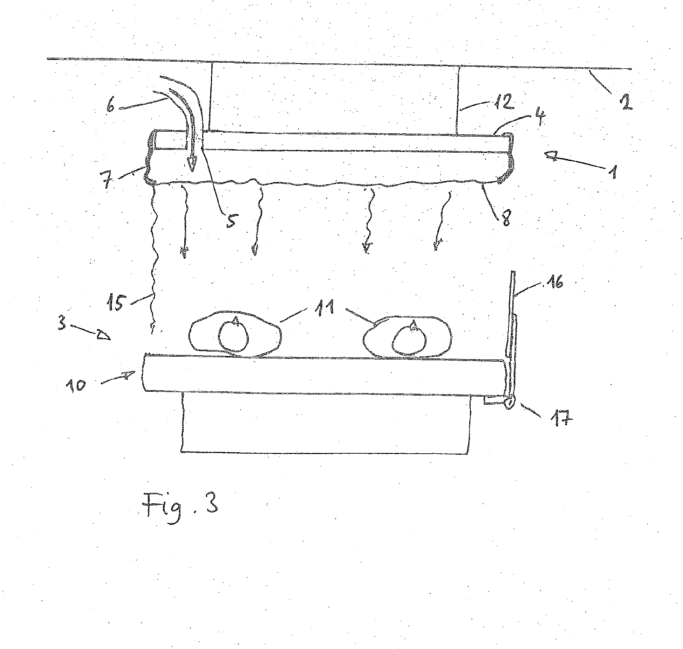

Fig. 3 zeigt eine Klimatisierungsvorrichtung nach einer dritten Ausführungsform. Anstelle der Schürze ist hier - in der Abbildung linksseitig dargestellt - ein Vorhang 15 als Luftrückhaltevorrichtung angebracht. Dieser Vorgang hängt von der horizontalen Luftverteilungseinrichtung 1 bis auf die Matratze 10 herab und kann von den Benutzern zum Betreten oder Verlassen des Bettes angehoben oder beiseite geschoben werden.

Alternativ - und in der Abbildung rechtsseitig dargestellt - kann auch eine starre Luftrückhaltevorrichtung 16 beispielsweise am Bett 3 angebracht sein, die beispielsweise mittels einer Klappvorrichtung 17 zum Betreten oder Verlassen des Bettes vom Benutzer nach unten geklappt werden kann. Hierdurch kann insbesondere gekühlte Luft, die aus der Luftverteilungseinrichtung 1 auf das Bett herabschleiert und deren Dichte höher ist, als diejenige von warmer Luft, besonders wirksam am Abfließen gehindert werden. Weiterhin können selbstverständlich auch an Kopf- und/oder Fußende des Bettes Luftrückhaltevorrichtungen wie die beschriebenen angebracht sein, um den Luftaustausch zwischen dem Bereich um die klimatisierte Liegestelle und der ihn umgebenden beispielsweise Wohnmobilkabine noch wirksamer zu verringern.

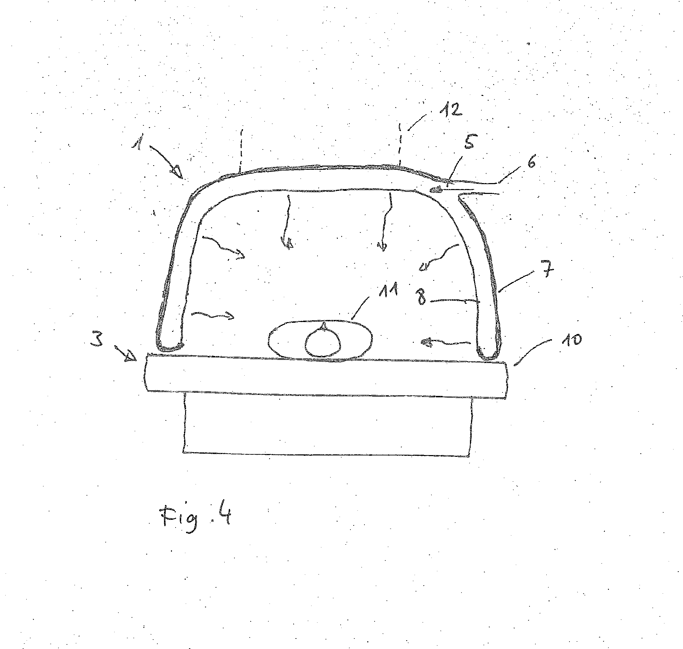

Fig. 4 zeigt eine Klimatisierungsvorrichtung nach einer vierten Ausführungsform. Dabei handelt es sich um eine tunnel- oder haubenförmige Luftverteilungseinrichtung 1 die mittels einer Aufhängung 12 am Dach der Fahrzeugkabine oder des Wohnmobils befestigt ist. Diese Luftverteilungseinrichtung besteht im Wesentlichen aus den durch zwei Lagen von Gewebe gebildeten Hohlraum der auf der Außenseite durch luftundurchlässiges Gewebe 7 und auf der Innenseite durch luftdurchlässiges Gewebe 8 gebildet wird. Die tunnel- oder haubenförmige Luftverteilungseinrichtung 1 reicht dabei vorzugsweise allseitig - also auch am Kopf- und Fußende - bis auf die Matratze 10 herab und liegt auf dieser auf. Zur Stabilisierung des Hohlraums können zwischen dem luftundurchlässigen Außengewebe 7 und dem luftdurchlässigen Innengewebe 8 Stabilisierungseinrichtungen beispielsweise aus Fäden oder Stoff eingearbeitet sein.

Ebenso können beispielsweise auch elastische Stabilisierungsrippen zur Formstabilisierung Anwendung finden. Es ist auch denkbar, auf die Aufhängung 12 zu verzichten, und die haubenförmige Luftverteilungseinrichtung freitragend auszugestalten. Dies kann beispielsweise durch eingearbeitete elastische Stabilisierungselemente erzielt werden oder durch die Stabilisierung mittels einer überdruckgefüllten Tragluftkonstruktion. Eine solche Konstruktion kann einerseits genügend Stabilität aufweisen, um eine freitragende Kuppel über den Benutzer auszubilden, und andererseits nachgiebig genug sein, um durch einen Benutzer zum Betreten oder Verlassen des Bettes beiseite gedrückt oder angehoben zu werden.

Ein weiterer Vorteil einer solchen Konstruktion ist, dass es sich besonders einfach und unabhängig von den Gegebenheiten der Schlafstätte in Fahrzeugen aber auch außerhalb von Fahrzeugen, in Gebäuden oder Zelten einsetzen lässt. Außerdem lässt sich eine solche Luftverteilungseinrichtung einerseits vom Benutzer bedarfsweise in sehr kurzer Zeit an die Klimatisierungsvorrichtung anschließen und in Betrieb nehmen, und andererseits bei Nichtgebrauch einfach klein zusammenfalten und verstauen.

Weiterhin ist es auch denkbar, eine solche Luftverteilungseinrichtung an einem mobilen Klimatisierungsaggregat anzuschließen und so zu betreiben. Eine solche Klimatisierungsvorrichtung könnte beispielsweise auch von Verleihfirmen oder Campingplatzbetreibern zur Miete angeboten werden, um beispielsweise mobil, ohne feste Installation in einem Wohnmobil betrieben zu werden.

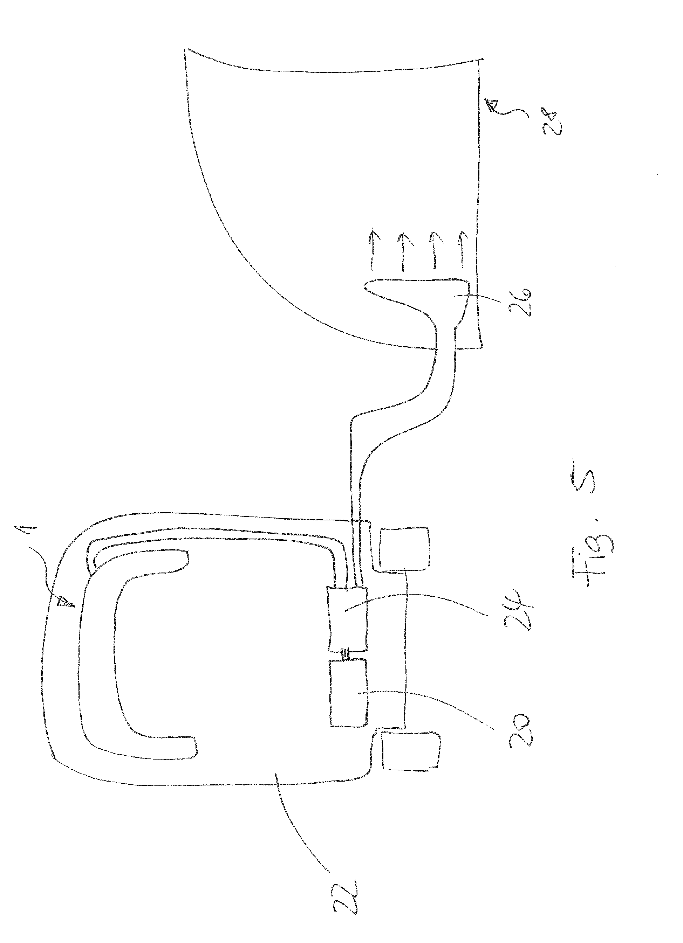

Fig. 5 stellt eine weitere vorteilhafte Ausgestaltung dar, bei der es vorgesehen ist, neben der Klimatisierung des Fahrzeuges 22 einen weiteren Luftausströmer 26 vorzusehen und diesen an den Ausblasanschluss des Klimagerätes 20 anzuschließen. Damit kann das Innere bspw. einer Strandmuschel 28, die in der Nähe des Fahrzeugs 22 aufgestellt ist, mit insbesondere gekühlter Luft beaufschlagt werden. In der Zuleitung des Luftstromes vom Klimaaggregat 20 erfolgt hierbei über eine Umschaltvorrichtung 24, die zwischen dem Luftauslass des Klimaaggregates 20 und den beiden möglichen Luftauströmern (im Fahrzeug - 1, in der Strandmuschel - 26) eingefügt ist, eine Umschaltung zwischen den beiden möglichen Ausströmorten der temperierten Luft. Die Umschaltung kann manuell oder in einer an sich bekannten Weise elektromechanisch, pneumatisch, hydraulisch oder einer sonstigen geeigenten Art und Weise erfolgen. Durch die Zweiwegeumschaltung kann damit wahlweise der Fahrzeuginnenraum oder die Strandmuschel 28, die hier nur beispielhaft für einen beliebigen weiteren Ausströmort angeführt wird, mit der klimatisierten Luft versorgt werden.

## Patentansprüche

1. Klimatisierungsvorrichtung für zumindest eine Sitz- und/oder Liegestelle, insbesondere für zumindest ein Bett, zum Einbau in einem Fahrzeug, mit einer oder mehreren Ausblaseinrichtungen zum Ausblasen von Luft, vorzugsweise temperierter Luft, insbesondere gekühlter Luft, **dadurch gekennzeichnet, dass** mindestens eine Ausblaseinrichtung von einer zumindest teilweise von einem luftdurchlässigen flexiblen Flächengebilde, vorzugsweise Gewebe, begrenzten, vorzugsweise kissen-, decken-oder haubenförmigen Luftverteilungseinrichtung abdeckt ist, wobei die Luftverteilungseinrichtung die zumindest eine Sitz- und/oder Liegestelle in Vertikalprojektion im Wesentlichen überdeckt.

2. Klimatisierungsvorrichtung nach einem der vorhergehenden Ansprüche, **dadurch gekennzeichnet, dass** die Luftverteilungseinrichtung zumindest zwei unterschiedliche flexible Flächengebilde, vorzugsweise Gewebe, mit unterschiedlichen Luftdurchlässigkeiten aufweist.

3. Klimatisierungsvorrichtung nach einem der vorhergehenden Ansprüche, **dadurch gekennzeichnet, dass** die Klimatisierungsvorrichtung ferner eine Luftrückhalteeinrichtung aufweist, wodurch vorzugsweise ein Luftaustausch zwischen einem der klimatisierbaren Sitz- und/oder Liegestelle zugeordneten Raum und der Umgebung verringert werden kann.

4. Klimatisierungsvorrichtung nach einem der vorhergehenden Ansprüche, **dadurch gekennzeichnet, dass** die Luftrückhalteeinrichtung im Wesentlichen senkrecht zur Haupterstreckungsebene der Luftverteilungseinrichtung - und vorzugsweise an dieser herabhängend befestigt - angeordnet ist.

5. Klimatisierungsvorrichtung nach einem der vorhergehenden Ansprüche, **dadurch gekennzeichnet, dass** das luftdurchlässige flexible Flächengebilde der Luftverteilungseinrichtung eine Fläche von mindestens 1 m² aufweist, wobei durch das luftdurchlässige flexible Flächengebilde eine maximale Strömungsgeschwindigkeit der ausgeblasenen, das flexible Flächengebilde durchtretenden Luft von vorzugsweise weniger als 0,1 m/s bei einem Druckgradienten von vorzugsweise zwischen 20 und 500 Pa, insbesondere von zwischen 50 und 200 Pa, erzeugbar ist.

6. Klimatisierungsvorrichtung nach einem der vorhergehenden Ansprüche, **dadurch gekennzeichnet, dass** die Luftverteilungseinrichtung im Wesentlichen kissen- oder deckenförmig ausgebildet und vorzugsweise oberhalb der Sitz- oder Liegefläche befestigbar ist.

7. Klimatisierungsvorrichtung nach einem der vorhergehenden Ansprüche, **dadurch gekennzeichnet, dass** die Luftverteilungseinrichtung im Wesentlichen deckenförmig ausgebildet und zur Anordnung oberhalb der mindestens einen Sitz- und/oder Liegestelle und unterhalb des Fahrzeug- oder Kabinendaches - und vorzugsweise an diesem befestigt - eingerichtet ist.

8. Klimatisierungsvorrichtung nach einem der vorhergehenden Ansprüche, **dadurch gekennzeichnet, dass** die Luftverteilungseinrichtung bereichsweise, insbesondere in Bereichen, die der Sitz- und/oder Liegestelle nicht zugewandt sind, ein weitgehend luftundurchlässiges flexibles Flächengebilde, vorzugsweise Gewebe, aufweist.

9. Klimatisierungsvorrichtung nach einem der vorhergehenden Ansprüche, **dadurch gekennzeichnet, dass** die Luftverteilungseinrichtung einen im Wesentlichen geschlossenen, flächigen Hohlraum, vorzugsweise Gewebe, ausbildet, durch welche der Hohlraum begrenzt ist.

10. Klimatisierungsvorrichtung nach einem der vorhergehenden Ansprüche, **dadurch gekennzeichnet, dass** die Klimatisierungsvorrichtung mobil aufstellbar und betreibbar ist und wobei die Luftverteilungseinrichtung zum Betrieb mit mindestens einer Ausblaseinrichtung zum Ausblasen temperierter Luft verbindbar ist.

11. Klimatisierungsvorrichtung nach einem der vorhergehenden Ansprüche, **dadurch gekennzeichnet, dass** die Klimatisierungsvorrichtung zum nachträglichen Einbau in ein Fahrzeug vorgesehen und geeignet ist.

12. Klimatisierungsvorrichtung nach einem der vorhergehenden Ansprüche, **dadurch gekennzeichnet, dass** die Klimatisierungsvorrichtung mindestens hinsichtlich einer der Komponenten Luftfördereinrichtung, Heizeinrichtung, Kühleinrichtung, Verdichter, Verdampfer, Wärmetauscher und/oder Luftverteilungseinrichtung modular aufgebaut ist.

13. Klimatisierungsvorrichtung nach einem der vorhergehenden Ansprüche, **dadurch gekennzeichnet, dass** die Klimatisierungsvorrichtung - vorzugsweise mittels einer drahtlosen Bedieneinheit, insbesondere mittels eines Mobiltelefons - fernbedienbar ist.

14. Klimatisierungsvorrichtung nach einem der vorhergehenden Ansprüche, **dadurch gekennzeichnet, dass** die Klimatisierungsvorrichtung eine - vorzugsweise elektrisch veränderbare, insbesondere dimmbare - Beleuchtungseinrichtung aufweist.

15. Fahrzeug, insbesondere Wohnwagen, Wohnmobil, Lastkraftwagen oder Schiff, mit mindestens einer klimatisierbaren Sitz- und/oder Liegestelle, insbesondere Bett, und mit einer Klimatisierungsvorrichtung nach einem der vorhergehenden Ansprüche.

16. Klimatisierungsvorrichtung nach einem der Ansprüche 1 bis 14, **dadurch gekennzeichnet, dass** vor der Luftverteilungseinrichtung eine Zweiwegumschaltvorrichtung für den Luftstrom angeordnet ist, über welche der Luftstrom der temperierten Luft entweder der Luftverteilungseinrichtung oder einer weiteren Ausströmvorrichtung zugeleitet werden kann, wobei sich die weitere Ausströmvorrichtung außerhalb des Fahrzeugs gemäß Anspruch 15, insbesondere in einer Strandmuschel, befindet.
